# EUROPÄISCHE PATENTSCHRIFT

(11) **EP 1 297 044 B1**
(45) Veröffentlichungstag und Bekanntmachung des Hinweises auf die Patenterteilung: **08.03.2006**
(21) Anmeldenummer: 01938254.8
(22) Anmeldetag: 08.06.2001
(51) Int. Cl.: C08G 18/28, C08G 18/79, C09D 175/04, C09G 3/00

(54) **VERWENDUNG VON FLUORIERTEN URETHANEN ALS GLEITMITTEL**
USE OF FLUORINATED URETHANES AS LUBRICATING AGENTS
UTILISATION D'URETHANES FLUORES COMME LUBRIFIANTS

(30) Priorität: 15.06.2000 DE 10029623
(43) Veröffentlichungstag der Anmeldung: 02.04.2003
(73) Patentinhaber: Clariant GmbH, 65929 Frankfurt am Main (DE)
(72) Erfinder: GROTTENMÜLLER, Ralf, 84489 Burghausen (DE); SCHMITT, Norbert, 84508 Burgkirchen (DE); PROBST, Anton, 84567 Erlbach (DE)
(74) Vertreter: Paczkowski, Marcus
(86) Internationale Anmeldenummer: PCT/EP2001/006527
(87) Internationale Veröffentlichungsnummer: WO 2001/096437

(56) Entgegenhaltungen:
- US-A- 4 792 354
- US-A- 5 502 225
- US-A- 5 989 698

## Beschreibung

Die Erfindung betrifft die Verwendung fluorhaltiger Urethane als Gleitmittel, insbesondere für Ski.

Skiwachse werden eingesetzt um die Gleiteigenschaften von Ski zu verbessern. Konventionelle Skiwachse enthalten im allgemeinen höhermolekulare Kohlenwasserstoffe wie Paraffine, Fettsäuren, Fettsäureester und Fettalkohole oder Mischungen dieser und ähnlicher Verbindungen. Als äußerst effektive Skiwachse haben sich bestimmte fluorierte Verbindungen erwiesen, die besonders im Hochleistungssport zum Einsatz kommen. Der Grund für die hohe Effektivität fluorierter Wachse ist die Beschichtung des Skis mit einer fluorierten Oberfläche mit sehr niedriger Oberflächenspannung, wodurch die Reibung stark vermindert wird. Durch Beschichten mit Fluorchemikatien lässt sich die Oberflächenspannung von z.B. Polyethylen (31 dyn/cm) auf Werte von 6-18 dyn/cm herabsetzen. Der Wert von 6 dyn/cm wird bei einer Oberfläche erreicht, die aus perfekt orientierten CF₃-Gruppen aufgebaut ist.

Es sind bereits einige fluorierte Verbindungen bekannt, die als Gleitmittel für Ski eingesetzt werden können. WO 89/10950 beschreibt beispielsweise den Zusatz von PTFE-Mikropulver zu nicht fluorierten Skiwachsen. Das Molgewicht des PTFE liegt bevorzugt bei 50.000 - 400.000 g/mol und die Teilchengröße bei kleiner 15 µm.

In EP 0 132 879 wird die Synthese von längerkettigen Perfluoralkanen der Formel F(CF₂)ₙF beschrieben, sowie deren Verwendung als Gleitmittel für Oberflächen.

In EP 0 444 752 wird die Verwendung fluorierter Diblockverbindungen der allgemeinen Formel F(CF₂)ₙ-(CH₂)ₘH mit n = 3-15 und m = 5-23 als Skiwachs beschrieben. Diese Verbindungen weisen den Vorteil auf, dass sie durch den Kohlenwasserstoffblock mit nicht fluorierten Paraffin-Wachsen verträglich sind.

DE 4 139 765 beschreibt Oligomere von fluorierten Olefinen der Formel F(CF₂)ₙ-CH=CH₂. Das Produkt kann durch radikalische Oligomerisierung der genannten Olefine hergestellt werden und eignet sich als Schmier- und Gleitmittel für verschiedene Oberflächen.

US 5 502 225 beschreibt die Verwendung von Perfluoralkylverbindungen als Gleitmittel in Ski-Wachsen. Diese Verbindungen werden erhalten durch Reaktion von perfluorierten Alkoholen, Isocyanaten und Alkoholen oder Aminen, wobei als Alkohole ausschließlich Monoalkohole in Frage kommen.

Skiwachse können mit verschiedenen Zusätzen versehen werden, um die durch die Reibung entstehende elektrostatische Aufladung zu verhindern, die zu einem Anhaften eines Wasserfilms führen kann. So beschreibt CH 660 018 beispielsweise die Verwendung von Graphit zur Erhöhung der Leitfähigkeit.

Es wurde nun gefunden, dass auch fluorierte Urethane auf der Basis von Polyalkoholen als Gleitmittel, insbesondere für Skiwachse eingesetzt werden können.

Gegenstand der Erfindung ist die Verwendung von fluorierten Urethanen als Gleitmittel. Diese fluorierten Urethane werden erhalten durch Umsetzung von
a) Verbindungen der Formel 1

   R_{f}-X-A-H (1)

   worin R_{f} eine Perfluoralkylgruppe mit 1 bis 20, vorzugsweise 4 bis 16, C-Atomen, X C₂-C₄-Alkylen, -CON(R¹)-Q- oder -SO₂N(R¹)-Q-, R¹ Wasserstoffoder C₁-C₄-Alkyl, Q C₂-C₄-Alkylen und A -O-, -S- oder -N(R¹)- bedeuten, oder Mischungen von Verbindungen der Formel 1 mit Verbindungen der Formel 2

   R-X-A-H (2)

   worin R C₁-C₂₀-Alkyl vorzugsweise C₄-C₁₆-Alkyl bedeutet und X und A die für die Formel (1) angegebenen Bedeutungen haben,
b) Triisocyanaten und
c) Verbindungen mit zwei oder mehr Hydroxylgruppen.

In der Formel 1 kann R_{f} eine gerade oder verzweigte Perfluoralkylgruppe sein. Üblicherweise enthalten diese Gruppen ausschließlich Fluoratome, doch können diese Perfluoralkylgruppen auch eine gewisse Anzahl von Wasserstoffatomen oder Chloratomen enthalten. Neben Verbindungen der Formel 1 mit ausschließlich Perfluoralkylgruppen kommen auch Mischungen mit den analogen Verbindungen der Formel 1 infrage, die anstelle der Perfluoralkylgruppe eine Alkylgruppe enthalten. Bevorzugt sind Verbindungen der Formel 1, worin A Sauerstoff, Q und X Ethylen und R¹ Wasserstoff oder C₁-C₂-Alkyl bedeuten.

Als trifunktionelle Isocyanate können beispielsweise Trimerisierungsprodukte von aliphatischen Diisocyanaten und trifunktionelle aromatische Isocyanate der folgenden Formeln eingesetzt werden:

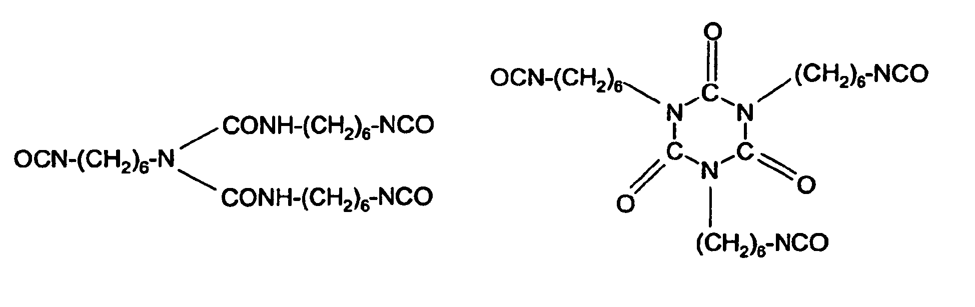

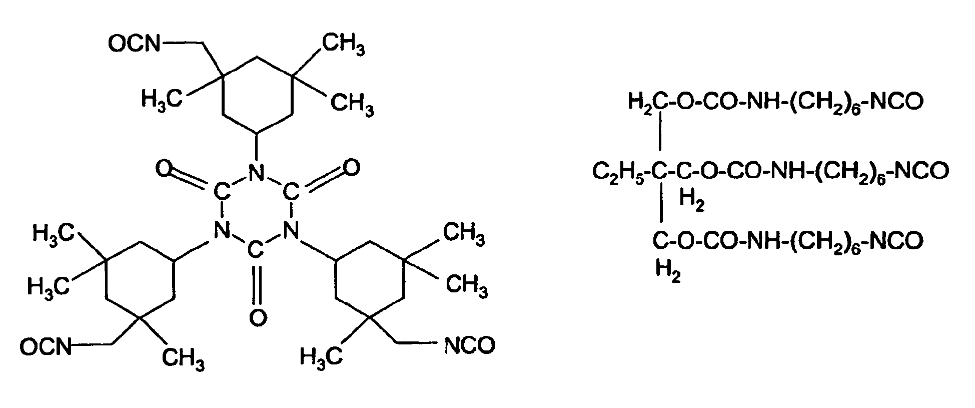

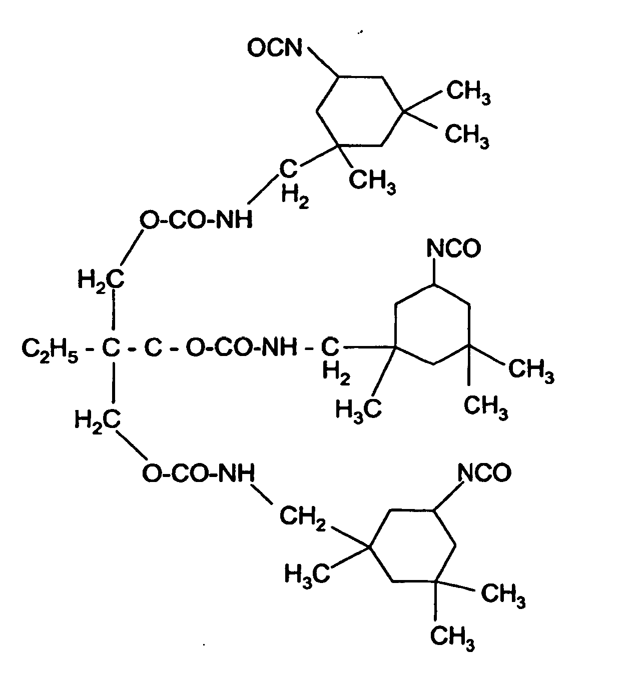

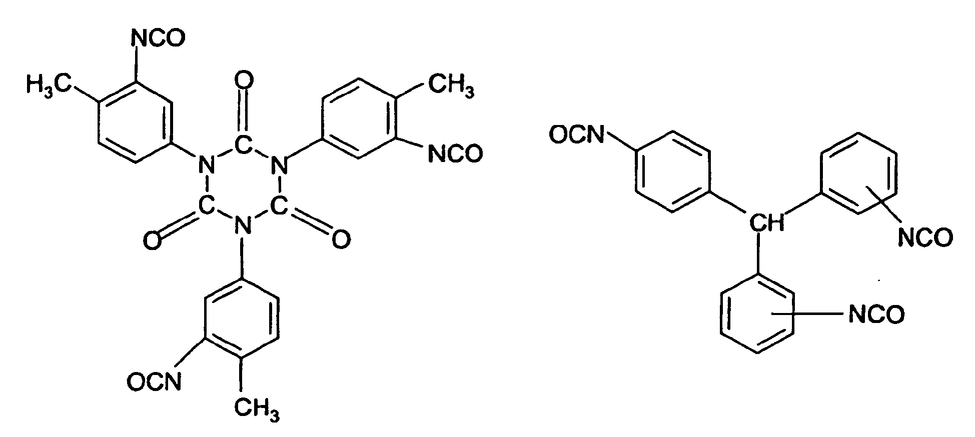

Als Verbindungen mit zwei oder mehr Hydroxylgruppen kommen hier folgende Typen von Verbindungen infrage:
Verbindungen mit zwei Hydroxylgruppen: 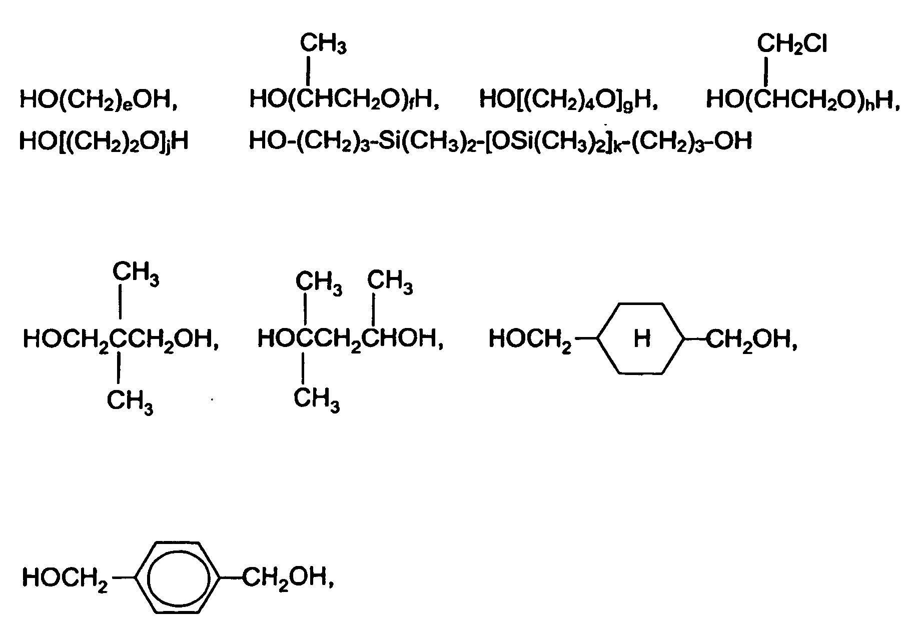
   In diesen Formeln bedeutet e eine ganze Zahl von 1 bis 20, f, g und h jeweils eine ganze Zahl von 1 bis 50, j und k jeweils eine ganze Zahl von 1 bis 100.
Verbindungen mit drei Hydroxylgruppen: 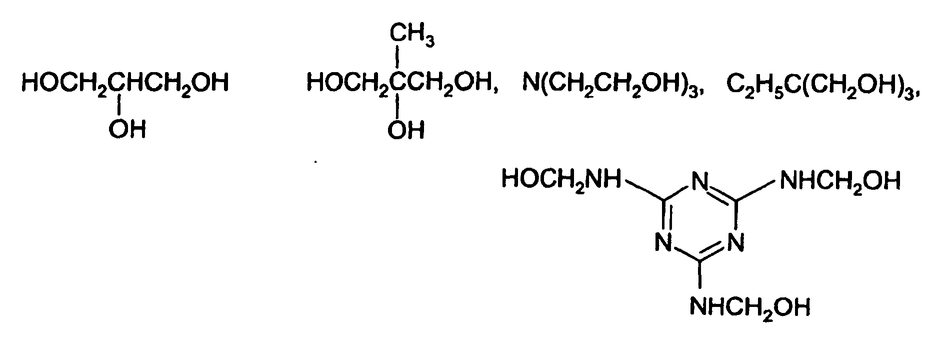
Verbindungen mit mehr als drei Hydroxylgruppen:

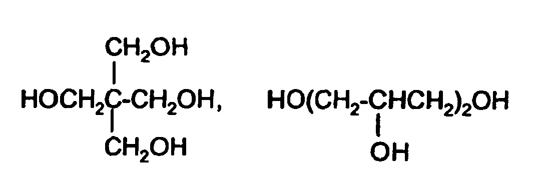

Bevorzugt sind Verbindungen mit zwei Hydroxylgruppen, insbesondere Verbindungen der oben angegebenen Formel

HO(CH₂)ₑOH

Je nach Schnee und Wetterbedingungen sind die Anforderungen an die physikalischen und chemischen Eigenschaften eines Skiwachses stark unterschiedlich. Durch geeignete Wahl der Isocyanatkomponente sowie der Art und Menge des Fluoralkohols und der fluorfreien Alkohole bzw. Amine lassen sich die physikalisch-chemischen Eigenschaften des Urethan-Wirkstoffs in weiten Grenzen leicht variieren und an die Erfordernisse anpassen. Es können auch Kombinationen von zwei oder mehreren der beschriebenen Isocyanate eingesetzt werden. Langkettige Fluoralkohole ≥C₈F₁₇ und aromatische Isocyanate erhöhen z.B. die Härte des Wirkstoffs, während kürzere Fluoralkohole und geeignete fluorfreie Alkohole wie etwa der verzweigte 2-Ethylhexylalkohol und der ungesättigte Oleylalkohol weiche, bei Raumtemperatur hochviskose Wirkstoffe ergeben. Als Fluoralkohole können z.B. Verbindungen der Struktur F-(CF₂)ₙ-CH₂-CH₂-OH (®Fluowet EA - CLARIANT, ®Zony TAN - DUPONT) oder F-(CF₂)ₙ-SO₂-N(C₂H₅)-CH₂₋CH₂-OH (®Fluorad FC - 3M) verwendet werden. Durch den Einbau fluorfreier Komponenten kann zudem eine Mischbarkeit bzw. Verträglichkeit mit fluorfreien Skiwachsen erzielt werden. Durch die Verwendung von Polyisocyanaten anstelle von Triisocyanaten kann das Molgewicht und damit die Abriebbeständigkeit des Wachses erhöht werden. Durch Verwendung von Di- anstelle von Triisocyanaten kann das Molgewicht dagegen herabgesetzt werden. Werden die beschriebenen Triisocyanate nur teilweise mit monofunktionellen fluorierten und fluorfreien Komponenten abgesättigt, so können die verbleibenden Isocyanatgruppen mit bifunktionellen Komponenten zu deutlich höheren Molgewichten vernetzt werden. Als bifunktionelle Vernetzer kommen z.B. Polyethylenglykol, Polypropylenglykol, Polytetramethylenglykol, Perfluorpolyether, α,ω-funktionelle Polysiloxane und *α,ω-*funktionelle Kohlenwasserstoffe in Frage. Der Einbau einer Vemetzerkomponente bietet die Möglichkeit neben dem Molgewicht auch die Härte und die Löslichkeit zu beeinflussen. Weiche Filme können z.B. durch α,ω-funktionelle Polysiloxane und Perfluorpolyether hergestellt werden, wobei Polysiloxane zudem die Löslichkeit in organischen Lösemitteln erhöhen. Anstelle der bifunktionellen Vernetzerkomponenten können die Isocyanate auch durch Zugabe geringer Mengen Wasser vernetzt werden.

Die Synthese der Urethan-Wirkstoffe erfolgt durch Umsetzung des Isocyanats mit den Alkohol-Komponenten bei erhöhten Temperaturen von 50 - 150°C. Werden mehrere verschiedene Isocyanate oder Alkohole bzw. Amine verwendet, so können alle Komponenten zusammen vorgelegt werden oder die Komponenten in mehreren Stufen zudosiert werden. Je nach Viskosität und Härte des Wirkstoffes kann der Zusatz von inerten Lösemitteln notwendig sein. Bei langsam reagierenden Komponenten kann die Reaktion durch Zugabe von bekannten Katalysatoren wie Aminen (z.B. 1,4-Diaza(2,2,2)bicyclooctan) oder Zinnorganischen-Verbindungen (z.B. Zinnoctoat) beschleunigt werden. Der Verlauf der Reaktion wird IR-Spektroskopisch über das Signal der Isocyanatgruppe bei 2275 - 2265 cm⁻¹ bestimmt.

Die Anwendung der erfindungsgemäßen Urethan-Skiwachse kann auf verschiedene Arten erfolgen. Das Wachs kann als Lösung in einem oder mehreren organischen Lösemitteln, vorzugsweise in einer Konzentration von 0,5 - 5 % oder als Feststoff auf den Ski aufgebracht werden. Soll das Wachs in Form einer Lösung verwendet werden, muss ein geeignetes Lösungsmittel gewählt werden, abhängig vom Fluorgehalt. Bei hohem Fluorgehalt kann es erforderlich sein, fluorierte Lösemittel wie z.B. Perfluorhexan, 1H-Perfluorhexan oder Frigen-Typen zu verwenden. Bei niedrigem Fluorgehalt eignen sich auch nicht fluorierte Lösemittel wie z.B. Ethylacetat, Butylacetat oder THF. Es können auch Gemische aus zwei oder mehreren Lösungsmitteln eingesetzt werden. Weiterhin ist es möglich den Wirkstoff in Form einer Suspension oder Dispersion anzuwenden.

Die beschriebenen fluorierten Wirkstoffe eignen sich als Skiwachse.
Durch die Beschichtung wird ein hydro- und oleophober Film auf die entsprechende Oberfläche aufgebracht, der die Reibung stark herabsetzt. Im Vergleich zu allen nach dem derzeitigen Stand der Technik bekannten fluorhaltigen Skiwachsen weisen die hier beschriebenen Urethan-Wirkstoffe ein wesentlich höheres Molgewicht auf. Höhermolekulare Verbindungen besitzen im Vergleich zu niedermolekularen eine bessere Abriebbeständigkeit auf dem Ski, so dass die Haltbarkeit der Wachsschicht über eine_größere mit dem Ski zurückgelegte Distanz gegeben ist. Der Einbau fluorfreier Alkoholkomponenten in den Wirkstoff bietet den Vorteil, dass eine Mischbarkeit mit fluorfreien Skiwachskomponenten und zudem eine Verträglichkeit mit dem Material der Skioberfläche gegeben ist.

### Beispiele

Es werden Beispiele beschrieben, die nach folgender allgemeinen Vorschrift synthetisiert wurden. Die angegebenen Komponenten wurden in einem 500 ml Kolben mit Rührwerk, Rückflusskühler und Heizbad zusammengewogen und bei der angegebenen Temperatur unter N₂-Atmosphäre unter Rühren reagiert. Die Vollständigkeit der Umsetzung wurde mittels IR-Spektroskopie kontrolliert.

### Beispiel 1: Wirkstoff A

160 g 1,1,2,2-Tetrahydroperfluordecanol (®Fluowet EA, CLARIANT)
100 g ®Desmodur N 3300 (BAYER)
17 g Polyglykol 200
100 g Butylacetat
Bedingungen: 125°C, 10 h

### Beispiel 2: Wirkstoff B

120 g 1,1,2,2-Tetrahydroperfluordecanol (®Fluowet EA, CLARIANT)
48 g Laurylalkohol
150 g ®Desmodur N 3300 (BAYER)
25 g Polyglykol 200
100 g Butylacetat
Bedingungen: 125°C, 10 h

Für die Anwendung wurden die Wirkstoffe zu 5 Gew.% in Butylacetat gelöst. Die anwendungstechnischen Ausprüfungen wurden mit diesen Lösungen durchgeführt.

### Applikation

Die Ausprüfungen auf Skiern werden von Serviceleuten, die spezialisiert auf solche Tests sind, ausgeprüft. Die zur Verfügung stehenden Skier werden mit einem Bezugswachs präpariert. Mit so präparierten Skiern wird je fünfmal über die Teststrecke gelaufen. Die schlechtesten bzw. besten Zeiten werden gestrichen und der Rest gemittelt. Dies ergibt die Nullwerte je Skipaar. Nach dem Entwachsen werden die Ski mit den zu testenden Wachsen präpariert und dieselbe Teststrecke wieder fünfmal gelaufen. Mit den gemessenen Zeiten wurde, wie oben beschrieben, verfahren. Die resultierenden Mittelwerte wurden in Bezug zu den Nullwerten je Skipaar gesetzt und daraus die prozentuale Veränderung ermittelt. Eine negative Differenz bedeutet eine kürzere Zeit für das zu testende Wachs und damit ein besseres und schnelleres Laufverhalten.
Die Skier wurden zuerst mit einer Wachsmischung aus Paraffin und Fluor (z.B.: Start SF 40) gewachst und anschließend mit Standardfluorwachsen (z.B.: Start SF 70) bzw. mit den erfindungsgemäßen fluorierten Urethanen.

### Beispiel 1

| | | |
|---|---|---|
| Lufttemperatur: | - 1 ,5°C | |
| Schneetemperatur: | - 2,0°C | |
| Luftfeuchtigkeit: | 88 % | |
| Testzeit: | Abend | |
| Sonstiges: | feuchter Neuschnee; Schneefall | |
| Fluorwirkstoff: | Wirkstoff A | Wirkstoff B |
| Differenz: | + 0,5 % | ± 0 % |

## Patentansprüche

1. Verwendung von fluorierten Urethanen, hergestellt durch Umsetzung von
a) Verbindungen der Formel 1
R_{f}-X-A-H (1)
worin R_{f} eine Perfluoralkylgruppe mit 1 bis 20, vorzugsweise 4 bis 16, C-Atomen, X C₂-C₄-Alkylen, -CON(R¹)-Q- oder -SO₂N(R¹)-Q-, R¹ Wasserstoff oder C₁-C₄-Alkyl, Q C₂-C₄-Alkylen und A -O-, -S- oder -N(R¹)- bedeuten, oder Mischungen von Verbindungen der Formel 1 mit Verbindungen der Formel 2
R-X-A-H (2)
worin R C₁-C₂₀-Alkyl vorzugsweise C₄-C₁₆-Alkyl bedeutet und X und A die für die Formel (1) angegebenen Bedeutungen haben,
b) Triisocyanaten und
c) Verbindungen mit zwei oder mehr Hydroxylgruppen als Gleitmittel.

2. Verwendung der fluorierten Urethane nach Anspruch 1 als Gleitmittel in Skiwachsen.

3. Verwendung der fluorierten Urethane nach Anspruch 1 als Gleitmittel in Form einer Lösung oder Suspension.

4. Verwendung nach Anspruch 1 oder 2, **dadurch gekennzeichnet, dass** man das fluorierte Urethan zusammen mit einer oder mehreren andersartigen fluorierten oder fluorfreien Komponenten einsetzt.

## Claims

1. Use of fluorinated urethanes, prepared by reacting
a) compounds of the formula 1
R_{f} - X - A - H (1)
in which R_{f} denotes a perfluoroalkyl group having from 1 to 20, preferably from 4 to 16, carbon atoms, X denotes C₂-C₄ alkylene, -CON(R¹)-Q- or -SO₂N(R¹)-Q-, R¹ denotes hydrogen or C₁-C₄ alkyl, Q denotes C₂-C₄ alkylene, and A denotes -O-, -S- or -N(R¹)-, or mixtures of compounds of the formula 1 with compounds of the formula 2
R - X - A - H (2)
in which R denotes C₁-C₂₀ alkyl, preferably C₄-C₁₆ alkyl, and X and A are as defined for the formula (1),
b) triisocyanates, and
c) compounds having two or more hydroxyl groups as lubricants.

2. Use of the fluorinated urethanes according to Claim 1 as lubricants in ski waxes.

3. Use of the florinated urethanes according to Claim 1 as lubricants in the form of a solution or suspension.

4. Use according to Claim 1 or 2, **characterized in that** the fluorinated urethane is used together with one or more other kinds of fluorinated or fluorine-free components.

## Revendications

1. Utilisation d'uréthannes fluorés, préparés en faisant réagir
a) des composés de formule 1
R_{f}-X-A-H (1)
dans laquelle R_{f} représente un groupe perfluoroalkyle contenant 1 à 20, de préférence 4 à 16 atomes de carbone, X représente un groupe alkylène en C₂ à C₄, -CON(R¹)-Q- ou -SO₂N(R¹)-Q-, R¹ représente un atome d'hydrogène ou un groupe alkyle en C₁ à C₄, Q représente un groupe alkylène en C₂ à C₄ et A représente -O-, -S- ou -N(R¹)-, ou des mélanges de composés 1 avec des composés de formule 2
R-X-A-H (2)
dans laquelle R représente un groupe alkyle en C₁ à C₂₀, de préférence alkyle en C₄ à C₁₆ et X et A ont les significations mentionnées pour la formule (1),
b) des triisocyanates et
c) des composés contenant deux groupes hydroxyle ou plus,
en tant que lubrifiants.

2. Utilisation des uréthannes fluorés selon la revendication 1 en tant que lubrifiants dans des farts.

3. Utilisation des uréthannes fluorés selon la revendication 1 en tant que lubrifiants sous forme de solution ou de suspension.

4. Utilisation selon la revendication 1 ou 2, **caractérisée en ce que** l'on met en oeuvre les uréthannes fluorés conjointement avec un ou plusieurs composants fluorés ou non fluorés de type différent.
